# FASCICULE DE BREVET EUROPEEN

(11) **EP 1 102 695 B1**
(45) Date de publication et mention de la délivrance du brevet: **02.05.2003**
(21) Numéro de dépôt: 99931350.5
(22) Date de dépôt: 13.07.1999
(51) Int. Cl.: B60T 13/573

(54) **MAITRE-CYLINDRE A REACTION HYDRAULIQUE EVOLUTIVE EN PRESSION**
HAUPTZYLINDER MIT DRUCKABHÄNGIGER, FORTSCHREITENDER, HYDRAULISCHER REAKTION
MASTER CYLINDER WITH HYDRAULIC REACTION OPERATING WITH DEVELOPING PRESSURE

(30) Priorité: 04.08.1998 FR 9809979
(43) Date de publication de la demande: 30.05.2001
(73) Titulaire: BOSCH SISTEMAS DE FRENADO, S.L., 08080 Barcelona 6 (ES)
(72) Inventeur: SIMON BACARDIT, Juan, F-93700 Drancy (FR)
(74) Mandataire: Hurwic, Aleksander Wiktor
(86) Numéro de dépôt international: FR9901733
(87) Numéro de publication internationale: WO00007860

(56) Documents cités:
- WO-A-98/03385
- FR-A- 2 755 929

## Description

La présente invention concerne un maître-cylindre à réaction hydraulique, comprenant : un corps cylindrique délimitant une chambre de travail de volume variable remplie d'un fluide de freinage, un piston principal monté sélectivement coulissant dans la chambre de travail suivant une première direction axiale pour réduire le volume de cette chambre de travail; un alésage axial percé dans le piston principal et délimitant une chambre de réaction de capacité variable; soumise à une pression variable; un piston de réaction fermant la chambre de réaction et monté sélectivement coulissant dans l'alésage axial, suivant la première direction axiale, pour réduire la capacité de la chambre de réaction; et un clapet anti-retour autorisant sélectivement un écoulement de fluide depuis la chambre de réaction vers la chambre de travail.

Un maître-cylindre de ce type est intégré au dispositif de freinage décrit dans l'art antérieur par le brevet EP - 0 662 894.

Un tel dispositif de freinage présente l'avantage d'optimiser l'intensité de la force de freinage en cas de coup de frein brusque, notamment en retardant la montée de la force de réaction qui s'oppose à cette force de freinage.

Plus récemment, la préoccupation s'est développée, dans la conception des systèmes de freinage, de pouvoir faire varier la force de réaction en sens inverse de l'effort de freinage, de manière à optimiser l'exploitation de l'énergie de freinage exercée par le conducteur en cas de freinage intense.

La présente invention se situe dans ce contexte et a pour but de proposer un maître-cylindre à réaction hydraulique de structure simple et offrant cette fonctionnalité.

A cette fin, le maître-cylindre de la présente invention, par ailleurs conforme à la définition générique qu'en donne le préambule ci-dessus, est essentiellement caractérisé en ce qu'il comprend un piston étagé monté flottant dans l'alésage axial entre la chambre de réaction et la chambre de travail et coulissant suivant la première direction axiale, à l'encontre d'un ressort de longueur décroissante, à mesure que la pression variable croît, en ce que le piston étagé délimite de façon étanche, dans l'alésage axial, une chambre annulaire soumise à une basse pression, et en ce que le clapet anti-retour est installé sur un perçage axial traversant le piston étagé, ce clapet étant ouvert ou fermé selon que la longueur du ressort est au moins égale à une distance minimale prédéterminée, ou inférieure à cette distance minimale.

Le piston étagé présente de préférence une section de plus petit diamètre relatif, tournée vers la chambre de travail, et une section de plus grand diamètre relatif, tournée vers la chambre de réaction.

Dans un mode de réalisation avantageux de l'invention, le clapet anti-retour comprend un siège de clapet défini sur un épaulement du perçage axial du piston étagé, un organe d'obturation sollicité élastiquement vers le siège suivant une seconde direction axiale, inverse de la première direction axiale, et une aiguille fixe par rapport au piston principal et dont une extrémité pointe dans la première direction axiale pour écarter sélectivement l'organe d'obturation du siège de clapet lorsque la longueur du ressort est au moins égale à la distance minimale prédéterminée.

D'autres caractéristiques et avantages de l'invention ressortiront clairement de la description qui en est faite ci-après et nullement limitatif, en référence aux dessins ci-joints dans lesquels :
- la Figure 1 est une vue en coupe du dispositif de freinage connu décrit dans le brevet EP - O 662 894 précité;
- la Figure 2 est une vue en coupe des organes spécifiques du maître-cylindre de l'invention; et
- la Figure 3 est un diagramme représentant l'évolution, en fonction de l'effort d'entrée appliqué au piston de réaction, de la pression hydraulique fournie par un maitre-cylindre conforme à l'invention, intégré dans un servomoteur pneumatique d'assistance au freinage

Le brevet antérieur EP- O 662 894 décrit un système de freinage, qui comprend schématiquement un servomoteur pneumatique d'assistance 1 et un maître-cylindre 2.

Le servomoteur comprend lui-même une enveloppe rigide 3 séparée en deux chambres 3a et 3b, de façon étanche, par une cloison mobile 4 comprenant une membrane 4a et une jupe rigide 4b et susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de dépression (non représentée) à travers un raccord 6.

La pression dans la chambre arrière 3b est contrôlée par un clapet pneumatique 7, commandé par une tige de commande 8, laquelle est reliée à une pédale de frein (non représentée).

Lorsque la tige de commande 8 est en position de repos, en l'occurrence tirée vers la droite, le clapet pneumatique 7 établit une communication entre les deux chambres 3a et 3b du servomoteur.

La chambre arrière 3b étant alors soumise à la même dépression que la chambre avant 3a, le piston 5 est repoussé vers la droite, en position de repos, par un ressort 9.

L'actionnement de la tige de commande 8 vers la gauche a pour effet, dans un premier temps, de déplacer le clapet pneumatique 7 de façon qu'il isole l'une de l'autre les chambres 3a et 3b puis, dans un deuxième temps, de déplacer ce clapet pneumatique de façon qu'il ouvre la chambre arrière 3b à la pression atmosphérique.

La différence de pression entre les deux chambres alors ressentie par la membrane 4a exerce sur la cloison mobile 4 une poussée qui tend à la déplacer vers la gauche et à lui permettre d'entraîner le piston 5 qui se déplace à son tour en comprimant le ressort 9.

L'effort de freinage exercé sur la tige de commande 8, ou "force d'entrée" et l'effort d'assistance au freinage, ou "force d'assistance", résultant de la poussée de la cloison mobile 4, sont alors appliqués ensemble suivant la direction axiale X-X+ de la tige de poussée 8 en direction du maître-cylindre 2, et se conjuguent pour constituer la force d'actionnement de ce dernier.

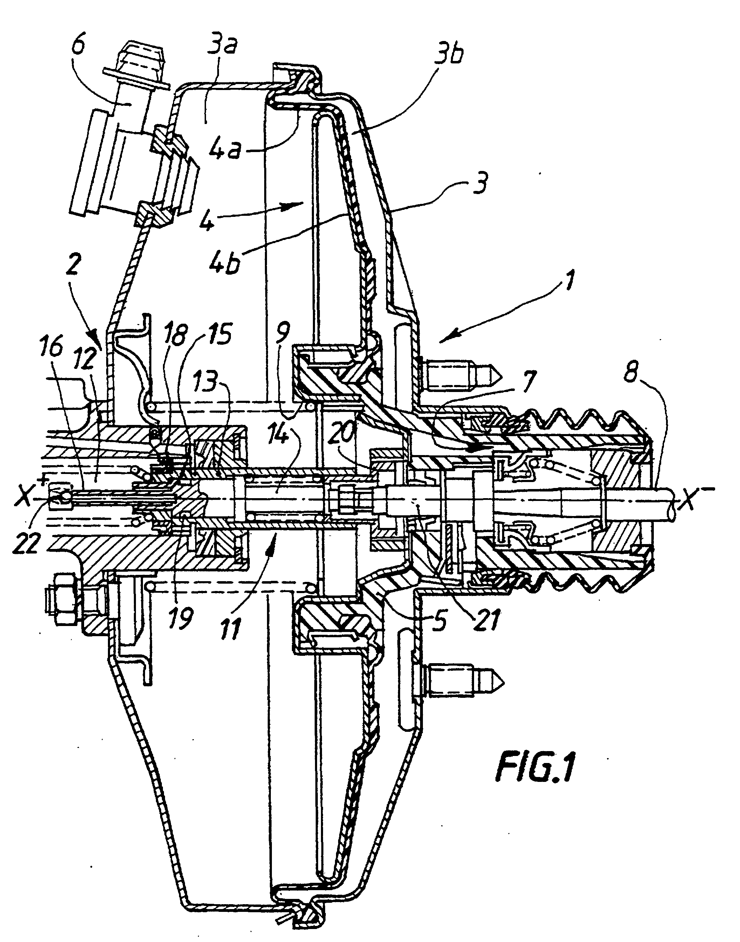

Plus précisément, la force d'actionnement est appliquée sur l'ensemble piston 11 du maître-cylindre et en provoque le déplacement vers la gauche (sur la figure 1) suivant la direction axiale X-X+, ce qui entraîne une élévation de pression du liquide de freinage présent dans la chambre de travail 12 du maître-cylindre, et un actionnement du frein relié à cette dernière.

L'ensemble piston 11 est en fait composite et comprend un piston principal 13 percé d'un alésage axial 130 fermé de façon étanche par un piston de réaction 14 et un joint annulaire 19.

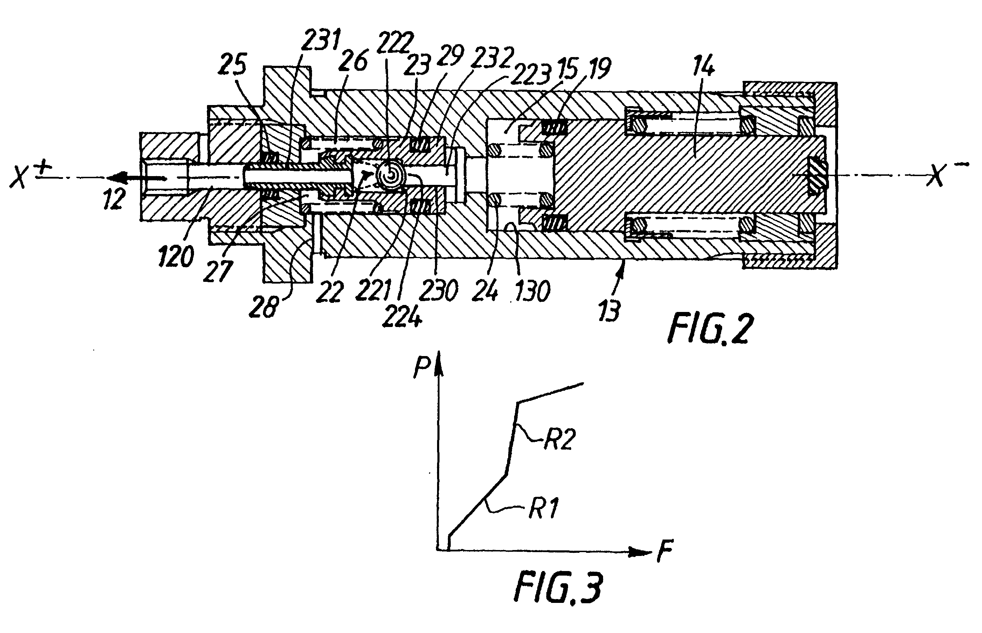

Le piston de réaction 14 est monté coulissant dans l'alésage 130, suivant la direction axiale X-X+, et à l'encontre de la force exercée par un ressort 24. Ce piston 14 délimite dans l'alésage 130 une chambre de réaction 15 qui communique avec la chambre de travail 12 à travers un clapet anti-retour 22 et éventuellement, dans le mode de réalisation illustré à la figure 2, à travers un canal 120 formé par une partie antérieure de l'alésage 130.

Comme décrit dans le brevet EP - O 662 894, le clapet anti-retour 22 a pour fonction d'autoriser sélectivement un écoulement de fluide de freinage depuis la chambre de réaction 15 vers la chambre de travail 12.

En dehors du passage de fluide que permet le clapet anti-retour 22 entre la chambre de travail 12 du maître-cylindre 2 et la chambre de réaction 15, le piston principal 13 coulisse de façon étanche dans le maître-cylindre 2, l'étanchéité étant obtenue grâce au moins à un joint annulaire 18 (figure 1).

Le piston principal 13 est relié, à travers la bague 20, à la jupe rigide 4b de manière à recevoir une partie au moins de la force d'assistance exercée par l'intermédiaire de cette jupe.

Le piston de réaction 14 est quant à lui disposé axialement, en regard d'une tige de poussée 21 susceptible de lui transmettre au moins la force d'entrée exercée sur la tige de commande 8 vers la gauche sur les figures 1 et 2.

Le maître-cylindre selon l'invention comprend en outre un piston étagé 23, monté flottant dans l'alésage axial 130 entre la chambre de réaction 15 et la chambre de travail 12 et coulissant dans un sens propre à comprimer un ressort 26 lors de l'actionnement du frein, autrement dit suivant la direction axiale X-X+.

Le piston étagé 23 délimite de façon étanche, dans l'alésage axial 130, une chambre annulaire 27 soumise à une basse pression, et par exemple mise en communication avec l'intérieur du servomoteur par un conduit 28.

Le clapet anti-retour 22 est installé sur un perçage axial 230 traversant le piston étagé 23, ce clapet anti-retour 22 étant ouvert ou fermé en fonction de l'état d'allongement du ressort 26.

Comme le montre la figure 2, le piston étagé 23 présente une section de plus petit diamètre relatif 231, tournée vers la chambre de travail 12 et coulissant de façon étanche dans l'alésage 130 grâce à un joint annulaire 25, et une section de plus grand diamètre relatif 232, tournée vers la chambre de réaction 15 et coulissant de façon étanche dans l'alésage 130 grâce à un joint annulaire 29.

Le clapet anti-retour comprend par exemple un siège de clapet 221 défini sur un épaulement du perçage axial 230 du piston étagé 23, une bille 222 sollicitée élastiquement vers le siège suivant la direction axiale X+X-, inverse de la direction axiale d'actionnement X-X+, et une aiguille 223, fixe par rapport au piston principal 13 et dont une extrémité 224 pointe dans la direction axiale d'actionnement X-X+ pour écarter la bille 222 de son siège 221 lorsque la longueur du ressort 26 est suffisante pour permettre le déplacement de la bille par l'extrémité de l'aiguille, c'est-à-dire aussi longtemps que la pression dans la chambre de réaction 15 reste relativement modérée.

Le fonctionnement du maître-cylindre de l'invention est le suivant.

Tant que la force d'entrée F appliquée sur le piston de réaction 14 est relativement faible, le clapet anti-retour 22 reste ouvert, de sorte que la pression dans la chambre de réaction 15 évolue comme la pression dans la chambre de travail 12, cette situation étant illustrée par le régime R1 sur la figure 3.

Au fur et à mesure que la pression s'élève dans la chambre de réaction 15, la force d'origine hydraulique agissant sur le piston étagé 23 croît, de sorte que ce piston se déplace dans la direction axiale d'actionnement X-X+ en comprimant le ressort 26.

Lorsque le ressort 26 a atteint une compression prédéterminée, l'extrémité 224 de l'aiguille 223 cesse de porter contre la bille 222, de sorte que le clapet anti-retour 22 se referme. Cette situation est illustrée sur la figure 3 par le régime R2, qui se distingue du régime R1 par le fait qu'un très faible accroissement de la force d'entrée F engendre un accroissement substantiel de la pression P du fluide de freinage.

## Revendications

1. Maître-cylindre à réaction hydraulique, comprenant : un corps cylindrique (2) délimitant une chambre de travail (12) de volume variable remplie d'un fluide de freinage; un piston principal (13) monté sélectivement coulissant dans la chambre de travail (12) suivant une première direction axiale (X-X+) pour réduire le volume de cette chambre de travail; un alésage axial (130) percé dans le piston principal (13) et délimitant une chambre de réaction (15) de capacité variable, soumise à une pression variable; un piston de réaction (14) fermant la chambre de réaction (15) et monté sélectivement coulissant dans l'alésage axial (130), suivant la première direction axiale (X-X+) pour réduire la capacité de la chambre de réaction (15); et un clapet anti-retour (22) autorisant sélectivement un écoulement de fluide depuis la chambre de réaction (15) vers la chambre de travail (12), **caractérisé en ce qu'**il comprend un piston étagé (23) monté flottant dans l'alésage axial (130) entre la chambre de réaction (15) et la chambre de travail (12) et coulissant suivant la première direction axiale (X-X+), à l'encontre d'un ressort (26) de longueur décroissante, à mesure que la pression variable croît, **en ce que** le piston étagé (23) délimite de façon étanche, dans l'alésage axial (130), une chambre annulaire (27) soumise à une basse pression, et **en ce que** le clapet anti-retour (22) est installé sur un perçage axial (230) traversant le piston étagé (23), ce clapet anti-retour (22) étant ouvert ou fermé selon que la longueur du ressort qui traduit la position du piston étagé (23) par rapport à une aiguille (223) fixe par rapport au piston principal 13, est au moins égale à une distance minimale prédéterminée, ou inférieure à cette distance minimale.

2. Maître-cylindre suivant la revendication 1, **caractérisé en ce que** le piston étagé (23) présente une section (231) de plus petit diamètre relatif, tournée vers la chambre de travail (12), et une section (232) de plus grand diamètre relatif, tournée vers la chambre de réaction (15).

3. Maître-cylindre suivant la revendication 1 ou 2, **caractérisé en ce que** le clapet anti-retour (22) comprend un siège de clapet (221) défini sur un épaulement du perçage axial (230) du piston étagé (23), un organe d'obturation (222) sollicité élastiquement vers le siège (221) suivant une seconde direction axiale (X+X-), inverse de la première direction axiale, et l'aiguille (223) dont une extrémité (224) pointe dans la première direction axiale (X-X+) pour écarter sélectivement l'organe d'obturation (222) du siège de clapet (221) lorsque la longueur du ressort est au moins égale à la distance minimale prédéterminée.

## Patentansprüche

1. Hauptzylinder mit hydraulischer Reaktion mit: einem zylindrischen Körper (2), der eine Arbeitskammer (12) mit variablem Volumen, die mit einem Bremsfluid gefüllt ist, begrenzt; einem Hauptkolben (13), der in der Arbeitskammer (12) in einer ersten axialen Richtung (X-X+) selektiv verschiebbar montiert ist, um das Volumen dieser Arbeitskammer zu verringern; einer axialen Bohrung (130), die im Hauptkolben (13) ausgebildet ist und eine Reaktionskammer (15) mit variablem Fassungsvermögen begrenzt, die einem variablen Druck ausgesetzt wird; einem Reaktionskolben (14), der die Reaktionskammer (15) verschließt und in der axialen Bohrung (130) in der ersten axialen Richtung (X-X+) selektiv verschiebbar montiert ist, um das Fassungsvermögen der Reaktionskammer (15) zu verringern; und einem Rückschlagventil (22), das selektiv ein Strömen von Fluid von der Reaktionskammer (15) zur Arbeitskammer (12) gestattet, **dadurch gekennzeichnet, daß** er einen abgestuften Kolben (23) aufweist, der schwimmend in der axialen Bohrung (130) zwischen der Reaktionskammer (15) und der Arbeitskammer angebracht ist (12) und entlang der ersten axialen Richtung (X-X+) gegen eine Feder (26) mit abnehmender Länge gleitet, je weiter der variable Druck zunimmt, daß der abgestufte Kolben (23) in dichter Weise in der axialen Bohrung (130) eine ringförmige Kammer (27) begrenzt, die einem niedrigen Druck ausgesetzt wird, und daß das Rückschlagventil (22) in einer axialen Bohrung (230) installiert ist, die den abgestuften Kolben (23) durchquert, wobei dieses Rückschlagventil (22) offen oder geschlossen ist, je nachdem ob die Länge der Feder, die die Position des abgestuften Kolbens (23) bezüglich einer Nadel (223) umsetzt, die bezüglich des Hauptkolbens (13) fest ist, zumindest gleich einem vorbestimmten minimalen Abstand oder geringer als dieser minimale Abstand ist.

2. Hauptzylinder nach Anspruch 1, **dadurch gekennzeichnet, daß** der abgestufte Kolben (23) einen Abschnitt (231) mit kleinerem relativem Durchmesser, der zur Arbeitskammer (12) gerichtet ist, und einen Abschnitt (232) mit größerem relativem Durchmesser, der zur Reaktionskammer (15) gerichtet ist, aufweist.

3. Hauptzylinder nach Anspruch 1 oder 2, **dadurch gekennzeichnet, daß** das Rückschlagventil (22) einen Ventilsitz (221), der auf einem Absatz der axialen Bohrung (230) des abgestuften Kolbens (23) definiert ist, eine Absperreinrichtung (222), die elastisch zum Sitz (221) in einer zweiten axialen Richtung (X+X-) beaufschlagt wird, die zur ersten axialen Richtung entgegengesetzt ist, und die Nadel (223) aufweist, von welcher ein Ende (224) in die erste axiale Richtung (X-X+) zeigt, um selektiv die Absperreinrichtung (222) vom Ventilsitz (221) zu entfernen, wenn die Länge der Feder zumindest gleich dem vorbestimmten minimalen Abstand ist.

## Claims

1. Master cylinder with hydraulic reaction, comprising: a cylindrical body (2) delimiting a variable-volume working chamber (12) full of brake fluid; a main piston (13) mounted to slide selectively in the working chamber (12) in a first axial direction (X-X+) to reduce the volume of this working chamber; an axial bore (130) pierced in the main piston (13) and delimiting a variable-capacity reaction chamber (15) subjected to a variable pressure; a reaction piston (14) closing the reaction chamber (15) and mounted to slide selectively in the axial bore (130) in the first axial direction (X-X+) to reduce the capacity of the reaction chamber (15); and a non-return valve (22) selectively allowing fluid to flow from the reaction chamber (15) towards the working chamber (12), **characterized in that** it comprises a stepped piston (23) mounted so that it can float in the axial bore (130) between the reaction chamber (IS) and the working chamber (12), and sliding in the first axial direction (X-X+) against a spring (26) whose length decreases, as the variable pressure increases, **in that** the stepped piston (23) delimits in a leaktight fashion, within the axial bore (130), an annular chamber (27) subjected to a low pressure, and **in that** the non-return valve (22) is installed on an axial drilling (230) passing through the stepped piston (23), this non-return valve (22) being open or closed according to whether the length of the spring that shows the position of the stepped piston (23) with respect to a needle (223) which is stationary with respect to the main piston (13) is at least equal to a predetermined minimal distance, or less than this minimal distance.

2. Master cylinder according to Claim 1, **characterized in that** the stepped piston (23) has a section (231) of smaller relative diameter, facing towards the working chamber (12), and a section (232) of larger relative diameter, facing towards the reaction chamber (15).

3. Master cylinder according to Claim 1 or 2, **characterized in that** the non-return valve (22) comprises a valve seat (221) defined on a shoulder of the axial drilling (230) in the stepped piston (23), a shut-off member (222) urged elastically towards the seat (221) in a second axial direction (X+X-) which is the opposite of the first axial direction, and the needle (223) one end (224) of which points in the first axial direction (X-X+) for selectively moving the shut-off member (222) away from the valve seat (221) when the length of the spring is at least equal to the predetermined minimal distance.
